# EUROPÄISCHE PATENTSCHRIFT

(11) **EP 3 366 711 B1**
(45) Veröffentlichungstag und Bekanntmachung des Hinweises auf die Patenterteilung: **08.07.2020**
(21) Anmeldenummer: 18158701.5
(22) Anmeldetag: 26.02.2018
(51) Int. Cl.: C08F 220/24, B27K 3/15

(54) **ZUSAMMENSETZUNG ZUR IMPRÄGNIERUNG VON HOLZ- UND STEINOBERFLÄCHEN**
COMPOSITION FOR THE IMPREGNATION OF WOOD AND STONE SURFACES
COMPOSITION DESTINÉE À L'IMPRÉGNATION DE SURFACES EN BOIS ET EN PIERRE

(30) Priorität: 27.02.2017 CH 2232017
(43) Veröffentlichungstag der Anmeldung: 29.08.2018
(73) Patentinhaber: Schoeller Technologies AG, 9475 Sevelen (CH)
(72) Erfinder: LOTTENBACH, ROLAND, 9422 Staad (CH); GARTMANN, VERDAN, 8048 Zürich (CH); KOHN, HANS, 9450 Lüchingen (CH)
(74) Vertreter: Rentsch Partner AG

(56) Entgegenhaltungen:
- EP-A1- 3 015 480
- WO-A2-2010/030044
- JP-A- 2011 099 077
- JP-A- 2013 136 668

## Beschreibung

### TECHNISCHES GEBIET

Die Erfindung betrifft eine Zusammensetzung zur Imprägnierung von Holz- und Steinoberflächen, umfassend ein Copolymer, hergestellt durch Copolymerisation verschiedener Monomere, von welchen mindestens eines eine perfluorierte Alkylgruppe beinhaltet, und mindestens einem nicht fluorierten organischen Lösungsmittel, welche den Holz- und Steinoberflächen nach Verdampfen der Lösungsmittel wasserabweisende und ölabweisende Eigenschaften verleiht.

### STAND DER TECHNIK

Zum Schutz und zur Pflege von nicht lackierten Holzkonstruktionen, wie z.B. Bootsdecks, Böden von Terrassen und Balkonen und Ähnlichem, sind aus dem Stand der Technik Öle bekannt, welche üblicherweise in das Holz eindringen und es so wasserabweisend und witterungsbeständiger machen. Um auch alten, versprödeten Gegenständen wieder eine gleichmässige, neuartige Optik zu verschaffen, enthalten solche Öle häufig Farbpigmente, welche die natürliche Holzfarbe nachahmen. Nachteilig wirkt sich dabei allerdings der durch die Farbpigmentierung ausgelöste Effekt des Nachdunkelns aus, welcher durch UV Strahlung noch verstärkt wird. Daher kann es leicht zu einer unerwünschten Veränderung der Farbe der Holzkonstruktion kommen. Des Weiteren kommt es durch die Verwendung von Farbpigmenten und die daraus resultierende dunklere Oberfläche zu einem, durch Sonneneinstrahlung ausgelösten, signifikant grösseren Temperaturanstieg der Oberfläche. Ein gravierender Nachteil ergibt sich daraus für Holzkonstruktionen, welche wegen ihrer Funktion, z.B. als Böden, Geländer oder Ähnlichem, mit nackter Haut in Berührung kommen, z.B. durch Barfuss gehen. Gerade an heissen Sommertagen bringen hohe Oberflächentemperaturen eine ausserordentliche Einschränkung des Komforts mit sich. Zusätzlich bedingt ein solcher Temperaturanstieg an einer, mit einem Öl behandelten, Oberfläche das Aufsteigen von Öldämpfen, was den Komfort noch weiter einschränkt. Des Weiteren führt durch Sonneneinstrahlung bedingtes Aufheizen zu deutlich grösseren Temperaturunterschieden des behandelten Holzes an Tag und Nacht. Unter anderem durch die daraus resultierende tägliche Expansion und Kontraktion entstehen Risse im Holz, welche die Lebensdauer signifikant verringern. Weitere Nachteile ergeben sich bei der Verwendung von Ölen zum Schutz von Holzkonstruktionen durch haptische Veränderungen, d.h. die Oberflächen fühlen sich unangenehm ölig und schmierig an. Zudem von Bedeutung ist, dass sich solche Öle relativ schnell auswaschen lassen, insbesondere dann, wenn zur Oberflächenreinigung tensidische Reinigungsmittel verwendet werden. Aufgrund der nicht zufriedenstellenden Beständigkeit, müssen die Oberflächen häufig nachbehandelt werden, was den Instandhaltungsaufwand und auch die Unterhaltungskosten erhöht.

EP3015480A1 offenbart ein Oberflächenbehandlungsmittel, insbesondere ein wasser- und ölabweisendes Mittel, enthaltend ein fluorhaltiges Polymer.

Da Holzschutzmittel auf Ölbasis zwar eine zufriedenstellende wasserabweisende Wirkung zeigen, aber durch ihre chemische Natur nicht ölabweisend sind, wäre es von Vorteil, eine Zusammensetzung zu verwenden, die sowohl wasser- als auch ölabweisend ist.

Speziell in der Textilindustrie und Haushaltswarenindustrie werden bestimmte fluorierte und perfluorierte Verbindungen, wie z.B. Polytetrafluroethylen, Perfluoroktansäure oder Perfluoroktansulfonsäure, verwendet um Produkten wasser- und ölabweisenden Eigenschaften zu verleihen.

### AUFGABE DER ERFINDUNG

Eine Aufgabe der Erfindung besteht darin, die, bei der Verwendung von Ölen zum Schutz und zur Pflege von Holzkonstruktionen, bekannten Nachteile zu beseitigen und eine Zusammensetzung mit ölabweisender und wasserabweisender Wirkung zur Imprägnierung sowohl von Holz- als auch von Steinkonstruktionen bereitzustellen.

Ein Vorteil der Erfindung besteht darin, dass Wassereinlagerungen verringert werden und damit Degeneration und Alterung der Holz- oder Steinkonstruktion verlangsamt wird.

Ein weiterer Vorteil der Erfindung besteht darin, dass Degeneration und Verfärbung durch UV Strahlung verhindert werden.

Ein weiterer Vorteil der Erfindung besteht darin, dass das Auftreten von Farbveränderungen der Holz- oder Steinoberfläche vermieden werden und damit zu grosse Temperaturanstiege bei Sonneneinstrahlung verhindert werden. Einerseits wird eine Komforteinschränkung aufgrund von Hautkontakt mit einer heissen Oberfläche vermieden, als auch eine hohe Oberflächentemperaturschwankung an Tag und Nacht verhindert.

Ein weiterer Vorteil der Erfindung besteht darin, dass ein witterungsbeständiges Imprägnierungsmittel für Holz- und Steinkonstruktionen bereitgestellt wird, welches eine hohe Beständigkeit aufweist und dadurch den Pflegeaufwand für die jeweilige Holz- oder Steinkonstruktion verringert.

Die Aufgabe wird erfindungsgemäss durch die Merkmale des unabhängigen Anspruchs gelöst. Weitere, vorteilhafte Ausgestaltungen der Erfindung sind in den abhängigen Ansprüchen angeführt.

### DARSTELLUNG DER ERFINDUNG

Die Erfindung betrifft eine Zusammensetzung umfassend:
a) ein Copolymer, hergestellt durch Copolymerisation von mindestens einem Monomer der Formel (I), mindestens einem Monomer der Formel (II), mindestens einem Monomer der Formel (III) und mindestens einem Monomer der Formel (IV):

   R_{f}-(CH₂)₂-OC(O)-P¹ (I)

   R²⁻OC(O)-P² (II)

   R³-OC(O)-P³ (III)

   R⁴-NH-C(O)-P⁴ (IV)

   wobei R_{f} eine verzweigte oder unverzweigte Perfluoroalkylgruppe darstellt, P¹, P² und P³ und P⁴ polymerisierbare verzweigte oder unverzweigte Kohlenwasserstoffgruppen, welche mindestens eine Doppelbindung enthalten, darstellen und R² eine Cycloalkylgruppe, und R³ eine Alkylgruppe darstellen, und wobei R4 eine Alkylaminogruppe darstellt, wobei das Copolymer nicht aus weiteren Monomeren hergestellt ist; und
b) mindestens ein, nicht fluoriertes organisches Lösungsmittel. Vorzugsweise umfassen die polymerisierbaren Gruppen P¹, P², P³ und P⁴ direkt an die Carbonylgruppe gebundene Doppelbindungen, wie z.B. -CH=CH₂, -C(CH₃)=CH₂ oder -C(C₂H₅)=CH₂. Des Weiteren kann es von Vorteil sein, wenn R² eine C₅-C₂₀-Cycloalkylgruppe und R³ eine C₄-C₂₀-Alkylgruppe darstellt.

In einer weiteren Ausführungsform stellt R_{f} eine C₆ bis C₈ verzweigte oder unverzweigte Perfluoroalkylgruppe dar. So kann in einer bevorzugten Ausführungsform beispielsweise Perfluorohexyl-ethylmethacrylat (Fluowet MA 600 Flüssig, Archroma Management GmbH) oder auch Fluowet AC 812 Fest (Archroma Management GmbH) als Monomere der Formel (I) zur Herstellung des Copolymers der eingangs beschriebenen Art verwendet werden.

In einer weiteren, bevorzugten Ausführungsform wird zur Herstellung des Copolymers der eingangs beschriebenen Art als Monomer der Formel (II) Isobornylmethacrylat und/oder als Monomer der Formel (III) Stearylmethacrylat und/oder als Monomer der Formel (IV) *N*-[3-(Dimethylamino)propyl]methacrylamid verwendet.

In einer weiteren Ausführungsform der Erfindung umfasst die Zusammensetzung C₁₀ bis C₁₅ Kohlenwasserstoffe als organisches Lösungsmittel. Beispielsweise können zur Herstellung besonders geruchsarmer Ausführungsformen hochsiedende Kohlenwasserstoffe wie z.B. IsoparG (CAS-Nr: 64742-48-9; Hauptbestandteile: Isoalkane; Exxon), Isopar J (CAS-Nr: 64742-48-9; Hauptbestandteile: Isoalkane; Exxon) oder Shellsol D 100 (CAS-Nr: 64742-47-8; Hauptbestandteile: C₁₃-C₁₅ Paraffine und Napthene; Shell) verwendet werden. Weiter kann es förderlich sein Glykolether als alleiniges oder als zusätzliches nicht fluoriertes organisches Lösungsmittel einzusetzen.

In einer weiteren Ausführungsform umfasst die Zusammensetzung zusätzlich zu einem Copolymer der eingangs beschriebenen Art und mindestens einem nicht fluorierten organischen Lösungsmittel mindestens einen UV-Absorber (z.B. Nanobyk-3812, BYK Additives & Instruments, CeO₂-basiert).

In einer bevorzugten Ausführungsform beträgt der Anteil des eingesetzten UV Absorbers 2-10 Gew.-%, vorzugsweise 3-6 Gew.-%, bezogen auf das Copolymer.

In einer weiteren Ausführungsform umfasst die Zusammensetzung zusätzlich zu einem Copolymer der eingangs beschriebenen Art und mindestens einem nicht fluorierten organischen Lösungsmittel mindestens einen Entschäumer (z.B. BYK-066N, BYK Additives & Instruments).

In einer bevorzugten Ausführungsform beträgt der Anteil des eingesetzten Entschäumers 0.5-5 Gew.-%, vorzugsweise 0.5-1.5 Gew.-%, bezogen auf das Copolymer.

In einer bevorzugten Ausführungsform der Zusammensetzung zur Herstellung einer wasserabweisenden und ölabweisenden Imprägnierung beträgt die Massenkonzentration des Copolymers der eingangs beschriebenen Art zwischen 10 bis 120 g/L, besonders bevorzugt zwischen 20 bis 80 g/L.

Bei der Herstellung des Copolymers der eingangs beschriebenen Art aus Monomeren der Formeln (I) bis (IV) beträgt der Anteil des perfluorierten Monomers der Formel (I) mindestens 15%, der Anteil des Monomers der Formel (II) mindestens 3% und der Anteil des Monomers der Formel (III) mindestens 5%. Dadurch wird eine ausreichende wasserabweisende und ölabweisende Wirkung erzielt.

Je nach Anwendungsgebiet, kann die Zusammensetzung der eingangs beschriebenen Art mittels verschiedener, dem Fachmann bekannter Verfahren auf eine Holz- oder Steinkonstruktion aufgetragen werden. Beispielsweise kann die Zusammensetzung im Sprühverfahren aufgebracht werden. Vorzugsweise wird die Zusammensetzung auf eine neue oder gereinigte Oberfläche aufgetragen. Die Zusammensetzung dringt beim Auftragen in die Holzfasern oder in die Poren einer Steinkonstruktion ein. Während des anschliessenden Trockenvorgangs verdampft das nicht fluorierte organische Lösungsmittel, während das Copolymer im Holz oder Stein und auf dessen Oberfläche zurückbleibt und dadurch die Holz- oder Steinkonstruktion wasserabweisend und ölabweisend macht. In einer Variante kann der Trockenvorgang mittels einer Wärmebehandlung durchgeführt werden, wodurch die Imprägnierungseigenschaft noch verbessert werden kann.

Eine erfindungsgemässe Zusammensetzung der eingangs beschriebenen Art wird vorzugsweise zum Schutz und zur Pflege von Holz- und Steinkonstruktionen im Aussen- und/oder Nassbereich, wie z.B. Decks von Booten, Balkon- und Terrassenböden oder Ähnlichem, eingesetzt. Besonders eignet sich die erfindungsgemässe Zusammensetzung zur Anwendung auf Teakholz.

### BEISPIELE

Die folgenden Beispielrezepturen sind lediglich als repräsentative Ausführungsformen und nicht als Beschränkung des Umfangs der vorliegenden Erfindung zu verstehen. Zusätzlich zu diesen Rezepturen ergeben sich dem Fachmann aus der gesamten Beschreibung verschiedene Abwandlungen und Modifikationen, die ebenfalls unter den Schutzbereich der Ansprüche fallen.

**Beispiel 1: C₈- Copolymer mit 25% Trockenrückstand**

| | | |
|---|---|---|
| 66.0-% | Terlitol D60 (CAS 64742-48-9) | Lösungsmittel |
| 8.9% | Dowanol DPnB | Polymerisationslösung |
| 15.0% | Perfluoroalkyl-ethylacrylat (Fluowet AC 812 Fest) | Monomer der Formel (I) |
| 3.8% | Isobornylmethacrylat | Monomer der Formel (II) |
| 5.0% | Stearylmethacrylat | Monomer der Formel (III) |
| 1.2% | *N*-[3-(Dimethylamino)propyl]methacrylamid | Monomer der Formel (IV) |
| 0.1% | 2,2'-Azobis-(2-methyl-propionitril) | Initiator |

Zur Herstellung des Polymers werden obige Komponenten, mit Aussnahme des Initiators in einem Reaktionsgefäss unter Inertgasatmosphäre gemischt. Dann wird der Initiator zugegeben, das Reaktionsgefäss evakuiert und unter Rühren auf 75 °C für 5-6 h unter Rückfluss erhitzt. Danach werden die Heizquelle und der Rührer ausgeschaltet und die Probe über Nacht auf Raumtemperatur abgekühlt. Anschliessend wird die erhaltene Polymerisationslösung mit mindestens einem nicht fluorierten organischen Lösungsmittel verdünnt.

**Beispiel 2: C₆- Copolymer mit 40% Trockenrückstand**

| | | |
|---|---|---|
| 45.6% | Terlitol D60 (CAS 64742-48-9) | Lösungsmittel |
| 14.2% | Dowanol DPnB | Polymerisationslösung |
| 24.0% | Perfluorohexyl-ethylmethacrylat (Fluowet MA 600) | Monomer der Formel (I) |
| 6.0% | Isobornylmethacrylat | Monomer der Formel (II) |
| 10.0% | Stearylmethacrylat | Monomer der Formel (III) |
| 0.2% | 2,2'-Azobis-(2-methyl-propionitril) | Initiator |

Zur Herstellung des Polymers werden obige Komponenten, mit Aussnahme des Initiators in einem Reaktionsgefäss unter Inertgasatmosphäre gemischt. Dann wird der Initiator zugegeben, das Reaktionsgefäss evakuiert und unter Rühren auf 75 °C für 5-6 h unter Rückfluss erhitzt. Danach werden die Heizquelle und der Rührer ausgeschaltet und die Probe über Nacht auf Raumtemperatur abgekühlt. Anschliessend wird die erhaltene Polymerisationslösung mit mindestens einem nicht fluorierten organischen Lösungsmittel verdünnt.

## Patentansprüche

1. Eine Zusammensetzung umfassend:
a) ein Copolymer, hergestellt durch Copolymerisation von mindestens einem Monomer der Formel (I), mindestens einem Monomer der Formel (II), mindestens einem Monomer der Formel (III) und mindestens einem Monomer der Formel (IV):
R_{f}-(CH₂)₂-OC(O)-P¹ (I)
R²-OC(O)-P² (II)
R³-OC(O)-P³ (III)
R⁴-NH-C(O)-P⁴ (IV)
wobei R_{f} eine verzweigte oder unverzweigte Perfluoroalkylgruppe darstellt, P¹, P², P³ und P⁴ polymerisierbare verzweigte oder unverzweigte Kohlenwasserstoffgruppen , welche mindestens eine Doppelbindung enthalten, darstellen, R² eine Cycloalkylgruppe und R³ eine Alkylgruppe darstellen, und wobei R⁴ eine Alkylaminogruppe darstellt, wobei das Copolymer nicht aus weiteren Monomeren hergestellt ist; und
b) mindestens ein nicht fluoriertes organisches Lösungsmittel.

2. Eine Zusammensetzung gemäss Anspruch 1, **dadurch gekennzeichnet, dass** in a) zur Herstellung des Copolymers als Monomere der Formel (I) Perfluorohexyl-ethylmethacrylat (Fluowet MA 600 Flüssig Archroma Management GmbH) und/oder Perfluoroalkyl-ethylacrylat (Fluowet AC 812 Fest (Archroma Management GmbH) verwendet werden.

3. Eine Zusammensetzung gemäss einem der vorhergehenden Ansprüche, **dadurch gekennzeichnet, dass** in a) zur Herstellung des Copolymers als Monomer der Formel (II) Isobornylmethacrylat verwendet wird.

4. Eine Zusammensetzung gemäss einem der vorhergehenden Ansprüche, **dadurch gekennzeichnet, dass** in a) zur Herstellung des Copolymers als Monomer der Formel (III) Stearylmethacrylat verwendet wird.

5. Eine Zusammensetzung gemäss einem der vorhergehenden Ansprüche , **dadurch gekennzeichnet, dass** in a) zur Herstellung des Copolymers als Monomer der Formel (IV) *N*-[3-(Dimethylamino)propyl]methacrylamid verwendet wird.

6. Eine Zusammensetzung gemäss einem der vorherigen Ansprüche, **dadurch gekennzeichnet, dass** in b) C₁₀-C₁₅-Kohlenwasserstoffe als organische Lösungsmittel verwendet werden.

7. Eine Zusammensetzung gemäss einem der vorherigen Ansprüche, **dadurch gekennzeichnet, dass** in b) Glykolether als organische Lösungsmittel verwendet werden.

8. Eine Zusammensetzung gemäss einem der vorherigen Ansprüche, **dadurch gekennzeichnet, dass** die Zusammensetzung zusätzlich zu einem Copolymer und mindestens einem nichtfluorierten organischen Lösungsmittel mindestens einen UV-Absorber umfasst.

9. Eine Zusammensetzung gemäss einem der vorherigen Ansprüche, **dadurch gekennzeichnet, dass** die Zusammensetzung zusätzlich zu einem Copolymer und mindestens einem nicht fluorierten organischen Lösungsmittel mindestens einen Entschäumer umfasst.

10. Eine Zusammensetzung gemäss einem der vorherigen Ansprüche, **dadurch gekennzeichnet, dass** die Massenkonzentration des Copolymers zwischen 10 bis 120 g/L, vorzugsweise 20 bis 80 g/L beträgt.

11. Eine Zusammensetzung gemäss einem der vorherigen Ansprüche, **dadurch gekennzeichnet, dass** der Anteil des perfluorierten Monomers der Formel (I) mindestens 15% beträgt.

12. Eine Zusammensetzung gemäss einem der vorherigen Ansprüche, **dadurch gekennzeichnet, dass** der Anteil des Monomers der Formel (II) mindestens 3% beträgt.

13. Eine Zusammensetzung gemäss einem der vorherigen Ansprüche, **dadurch gekennzeichnet, dass** der Anteil des Monomers der Formel (III) mindestens 5% beträgt.

14. Eine Verwendung einer Zusammensetzung gemäss den Ansprüchen 1-13 als Imprägnierungsmittel von Holz- und Steinoberflächen um diesen nach Verdampfen der Lösungsmittel wasserabweisende und ölabweisende Eigenschaften zu verleihen.

15. Eine Verwendung gemäss Anspruch 14 für Holz- und Steinkonstruktionen, im Aussen- und/oder Nassbereich.

16. Eine Verwendung gemäss einem der Ansprüche 14 oder 15 für Teakholz.

## Claims

1. Composition including:
a) a copolymer produced by copolymerization of at least one monomer of the formula (I), at least one monomer of the formula (II), at least one monomer of the formula (III) and at least one monomer of the formula (IV):
R_{f}-(CH₂)₂-OC(O)-P¹ (I)
R²-OC(O)-P² (II)
R³-OC(O)-P³ (III)
R⁴-NH-C(O)-P⁴ (IV)
wherein R_{f} is a branched or unbranched perfluoroalkyl group, P¹, P², P³ and P⁴ are polymerizable branched or unbranched hydrocarbon groups comprising at least one double bond, R² is a cycloalkyl group and R³ is an alkyl group, and wherein R⁴ is an alkylamino group, wherein the copolymer is not produced from other monomers; and b) at least one non-fluorinated organic solvent.

2. Composition according to Claim 1, **characterized in that** in a) perfluorohexylethyl methacrylate (Fluowet MA 600 liquid Archroma Management GmbH) and/or perfluoroalkyl ethylacrylate (Fluowet AC 812 solid Archroma Management GmbH) are used as monomers of the formula (I) for producing the copolymer.

3. Composition according to either of the preceding claims, **characterized in that** in a) isobornyl methacrylate is used as monomer of the formula (II) for producing the copolymer.

4. Composition according to any of the preceding claims, **characterized in that** in a) stearyl methacrylate is used as monomer of the formula (III) for producing the copolymer.

5. Composition according to any of the preceding claims, **characterized in that** in a) N-[3-(dimethylamino)propyl]methacrylamide is used as monomer of the formula (IV) for producing the copolymer.

6. Composition according to any of the preceding claims, **characterized in that** in b) C₁₀-C₁₅-hydrocarbons are used as organic solvents.

7. Composition according to any of the preceding claims, **characterized in that** in b) glycol ethers are used as organic solvents.

8. Composition according to any of the preceding claims, **characterized in that**, in addition to a copolymer and at least one non-fluorinated organic solvent, the composition includes at least one UV absorber.

9. Composition according to any of the preceding claims, **characterized in that**, in addition to a copolymer and at least one non-fluorinated organic solvent, the composition includes at least one defoamer.

10. Composition according to any of the preceding claims, **characterized in that** the mass concentration of the copolymer is between 10 to 120 g/L, preferably 20 to 80 g/L.

11. Composition according to any of the preceding claims, **characterized in that** the proportion of the perfluorinated monomer of the formula (I) is at least 15%.

12. Composition according to any of the preceding claims, **characterized in that** the proportion of the monomer of the formula (II) is at least 3%.

13. Composition according to any of the preceding claims, **characterized in that** the proportion of the monomer of the formula (III) is at least 5%.

14. Use of a composition according to Claims 1-13 as impregnating agent for wood and stone surfaces in order to impart water-repellent and oil-repellent properties to said surfaces after evaporation of the solvent.

15. Use according to Claim 14 for wood and stone constructions outdoors and/or in wet areas.

16. Use according to either of Claims 14 or 15 for teak wood.

## Revendications

1. Composition comprenant :
a) un copolymère, préparé par copolymérisation d'au moins un monomère de formule (I), d'au moins un monomère de formule (II), d'au moins un monomère de formule (III) et d'au moins un monomère de formule (IV) :
R_{f}-(CH₂)₂-OC(O)-P¹ (I)
R²-OC(O)-P² (II)
R³-OC(O)-P³ (III)
R⁴-NH-C(O)-P⁴ (IV)
R_{f} représentant un groupe perfluoroalkyle ramifié ou non ramifié, P¹, P², P³ et P⁴ représentant des groupes hydrocarbonés polymérisables ramifiés ou non ramifiés, qui contiennent au moins une double liaison, R² représentant un groupe cycloalkyle et R³ un groupe alkyle, et R⁴ représentant un groupe alkylamino, le copolymère n'étant pas préparé à partir d'autres monomères ; et
b) au moins un solvant organique non fluoré.

2. Composition selon la revendication 1, **caractérisée en ce que** dans a) pour la préparation du copolymère, le méthacrylate de perfluorohexyl-éthyle (fluowet MA 600 liquide Archroma Management GmbH) et/ou l'acrylate de perfluoroalkyl-éthyle (fluowet AC 812 solide Archroma Management GmbH) est/sont utilisé(s) en tant que monomères de formule (I).

3. Composition selon l'une quelconque des revendications précédentes, **caractérisée en ce que** dans a), pour la préparation du copolymère, du méthacrylate d'isobornyle est utilisé en tant que monomère de formule (II).

4. Composition selon l'une quelconque des revendications précédentes, **caractérisée en ce que** dans a), pour la préparation du copolymère, du méthacrylate de stéaryle est utilisé en tant que monomère de formule (III).

5. Composition selon l'une quelconque des revendications précédentes, **caractérisée en ce que** dans a), pour la préparation du copolymère, du N-[3-(diméthylamino)propyl]méthacrylamide est utilisé en tant que monomère de formule (IV).

6. Composition selon l'une quelconque des revendications précédentes, **caractérisée en ce que** dans b), des hydrocarbures en C₁₀₋₁₅ sont utilisés en tant que solvants organiques.

7. Composition selon l'une quelconque des revendications précédentes, **caractérisée en ce que** dans b), des éthers de glycol sont utilisés en tant que solvants organiques.

8. Composition selon l'une quelconque des revendications précédentes, **caractérisée en ce que** la composition comprend, en plus d'un copolymère et d'au moins un solvant organique non fluoré, au moins un absorbant UV.

9. Composition selon l'une quelconque des revendications précédentes, **caractérisée en ce que** la composition comprend, en plus d'un copolymère et d'au moins un solvant organique non fluoré, au moins un antimousse.

10. Composition selon l'une quelconque des revendications précédentes, **caractérisée en ce que** la concentration massique du copolymère est comprise entre 10 et 120 g/L, de préférence 20 à 80 g/L.

11. Composition selon l'une quelconque des revendications précédentes, **caractérisée en ce que** la proportion du monomère perfluoré de formule (I) est d'au moins 15 %.

12. Composition selon l'une quelconque des revendications précédentes, **caractérisée en ce que** la proportion du monomère de formule (II) est d'au moins 3 %.

13. Composition selon l'une quelconque des revendications précédentes, **caractérisée en ce que** la proportion du monomère de formule (III) est d'au moins 5 %.

14. Utilisation d'une composition selon les revendications 1 à 13 en tant qu'agent d'imprégnation de surfaces de bois et de surfaces de pierre afin de leur conférer, après évaporation des solvants, des caractéristiques hydrofuges et oléofuges.

15. Utilisation selon la revendication 14 pour des constructions de bois et des constructions de pierre en zone extérieure et/ou en zone humide.

16. Utilisation selon l'une quelconque des revendications 14 et 15 pour le teck.
